# EUROPEAN PATENT APPLICATION

(11) **EP 4 730 829 A1**
(43) Date of publication of application: **22.04.2026**
(21) Application number: 25209363.8
(22) Date of filing: 17.10.2025
(51) Int. Cl.: H04N 23/61, H04N 23/65, H04N 23/66, H04N 23/661, H04N 23/667, H04N 23/69, H04N 23/695, G06F 1/3206, G06T 7/292, G06V 20/52

(54) **MONITORING EQUIPMENT, METHOD FOR MONITORING EQUIPMENT AND MONITORING SYSTEM**

(30) Priority: 18.10.2024 US 202418920532
(71) Applicant: TP-Link Systems Inc., Irvine, California 92618 (US)
(72) Inventor: YU, Chu Wei, Shenzhen, 518000 (CN); CHEN, Jin Fu, Shenzhen, 518000 (CN)
(74) Representative: Marks & Clerk LLP

(57) **Abstract**

The present disclosure provides a monitoring equipment, a method for a monitoring equipment and a monitoring system. The monitoring equipment including: an imaging device configured to be in a first mode or a second mode; a pan-tilt device configured to rotate to adjust an imaging orientation of the imaging device; and a motion detection device configured to transmit the wake-up signal to the imaging device in the first mode and transmit information related to the initial position to the pan-tilt device in response to detecting the moving object, and wherein the pan-tilt device is further configured to rotate to adjust the imaging orientation toward the moving object in response to the received information related to the initial position before the imaging device completes the switching from the first mode to the second mode.

## Description

### CROSS REFERENCE TO RELATED APPLICATIONS

This application claims the benefit of U.S. Non-Provisional Patent Application No. 18/920,532, filed on October 18, 2024 and titled "MONITORING EQUIPMENT, METHOD FOR MONITORING EQUIPMENT AND MONITORING SYSTEM". The entire disclosure of the aforementioned application is incorporated by reference as part of the disclosure of this application.

### TECHNICAL FIELD

The present disclosure relates to electronic equipment, and more specifically, to a monitoring equipment, a method for a monitoring equipment and a monitoring system.

### BACKGROUND

Monitoring equipment can provide security protection. By using the monitoring equipment to capture images, potential security threats, such as theft, invasion and sabotage, can be found and prevented in time. In business places, public places, families and other environments, monitoring equipment are an important means to ensure safety.

In one configuration of the monitoring equipment, the monitoring equipment may always operate in an active mode so as to capture images all the time. In this way, although the security level of monitoring equipment can be guaranteed, the power consumption of the monitoring equipment for monitoring is too high. In another configuration of the monitoring equipment, the monitoring equipment may capture images of the objects in active mode and may not capture images of the objects in low power consumption mode. Although this configuration can reduce the power consumption of monitoring equipment, it may not guarantee the security level of monitoring equipment. Therefore, at present, it may be hard to balance between the power consumption and security level of monitoring equipment when the monitoring equipment operate for security.

There is a need for an improved mechanism for monitoring equipment to reduce the power consumption and guarantee the security level of monitoring equipment.

### SUMMARY

In view of the above problems, the present disclosure provides a monitoring equipment which reduces the power consumption and guarantees the security level of monitoring equipment.

According to an aspect of the present disclosure, there is provided a monitoring equipment comprising: an imaging device configured to be in a first mode or a second mode, wherein the imaging device consumes less power in the first mode than in the second mode and captures images in the second mode; a pan-tilt device configured to rotate to adjust an imaging orientation of the imaging device; and a motion detection device configured to detect a moving object in the surrounding environment and generate a wake-up signal and an initial position of the moving object in response to detecting the moving object; wherein the motion detection device is further configured to transmit the wake-up signal to the imaging device in the first mode and transmit information related to the initial position to the pan-tilt device in response to detecting the moving object, wherein the imaging device is further configured to switch from the first mode to the second mode in response to the received wake-up signal, and wherein the pan-tilt device is further configured to rotate to adjust the imaging orientation of the imaging device toward the moving object in response to the received information related to the initial position before the imaging device completes the switching from the first mode to the second mode.

In some embodiments, the motion detection device is further configured to simultaneously transmit the wake-up signal to the imaging device in the first mode and transmit the information related to the initial position to the pan-tilt device in response to detecting the moving object.

In some embodiments, the information related to the initial position includes the initial position of the moving object, and wherein the pan-tilt device is further configured to determine one or more of a rotation speed, a rotation direction and a rotation angle of the pan-tilt motor based on the initial position of the moving object, and rotate based on one or more of the rotation speed, the rotation direction and the rotation angle of the pan-tilt motor.

In some embodiments, the information related to the initial position includes one or more of a rotation speed, a rotation direction and a rotation angle of the pan-tilt motor, and wherein the pan-tilt device is further configured to rotate based on one or more of the rotation speed, the rotation direction and the rotation angle of the pan-tilt motor.

In some embodiments, the monitoring equipment is further configured to determine a first updated position of the moving object and transmit information related to the first updated position of the moving object to the pan-tilt device.

In some embodiments, the motion detection device is further configured to transmit the information related to the initial position to the imaging device, wherein the imaging device is configured to determine the first updated position of the moving object based on the information related to the initial position by a vision detection algorithm.

In some embodiments, the imaging device is configured to: detect one or more candidate objects in the images captured by the imaging device by the vision detection algorithm, determine a deviation among the positions of the one or more candidate objects and the initial position of the moving object based on the information related to the initial position, select a candidate object from the one or more candidate objects based on the deviation, determine the position of the selected candidate object as the first updated position of the moving object.

In some embodiments, the monitoring equipment further comprises a communication device configured to transmit data via a communication network, wherein the imaging device is further configured to transmit the captured images to a server via the communication device, wherein the motion detection device is further configured to transmit the information related to the initial position to the server via the communication device, wherein the communication device is further configured to receive the information related to the first updated position of the moving object from the server, the first updated position of the moving object is determined by a vision detection algorithm run on the server based on the initial position and the captured images.

In some embodiments, the pan-tilt device is configured to rotate to adjust the imaging orientation of the imaging device toward the moving object based on the information related to the first updated position.

In some embodiments, the pan-tilt device is further configured to rotate to adjust the imaging orientation of the imaging device to align the centre of the field of view of the imaging device with the moving object.

In some embodiments, the monitoring equipment further comprises a storage device configured to store the images captured by the imaging device.

In some embodiments, the imaging device is configured to switch from the second mode to the first mode in response to detecting that a first mode condition is satisfied.

In some embodiments, the first mode condition comprises one or more of the following: the images device has been in the second mode for more than a threshold time; the number of frames of images captured by the imaging device for the moving object is greater than a threshold number of frames; a user instruction; the distance between the moving object and a reference position is greater than a threshold distance; and the moving object disappears from the field of view of the imaging device.

In some embodiments, the motion detection device is further configured to determine a second updated position of the moving object when the imaging device is in the second mode, and transmit information related to the second updated position to the pan-tilt device, wherein the pan-tilt device is configured to rotate to adjust the imaging orientation of the imaging device toward the moving object based on the information related to the first updated position and the information related to the second updated position.

In some embodiments, the motion detection device is further configured to determine a second updated position of the moving object and transmit information related to the second updated position to the imaging device when the imaging device is in the second mode, wherein the imaging device is configured to generate the information related to the first updated position based on the information related to the second updated position.

In some embodiments, the motion detection device comprises one or more of a radar, a low-power images sensor, an ultrasonic sensor and a passive infrared sensor.

According to another aspect of the present disclosure, there is provided a method for a monitoring equipment, the monitoring equipment comprising an imaging device, a pan-tilt device and a motion detection device, the method comprising: detecting a moving object in the surrounding environment through a motion detection device; in response to the motion detection device detecting the moving object, generating a wake-up signal and determining an initial position of the moving object by the motion detection device, and transmitting the wake-up signal to an imaging device in a first mode and transmitting information related to the initial position to a pan-tilt device by the motion detection device; in response to the imaging device receiving the wake-up signal, switching the imaging device from the first mode to the second mode and capturing images using the imaging device, wherein the imaging device consumes less power in the first mode than in the second mode; and in response to the pan-tilt device receiving the information related to the initial position, rotating the pan-tilt device to adjust an imaging orientation of the imaging device towards the moving object before the imaging device completes the switching from the first mode to the second mode.

According to another aspect of the present disclosure, there is provided a non-transitory computer-readable medium having stored thereon instructions which, when executed, cause a processor to perform the method as described above.

According to another aspect of the present disclosure, there is provided a driving equipment coupled to an imaging device, the driving equipment comprising: a pan-tilt device configured to rotate to adjust an imaging orientation of the imaging device, a motion detection device configured to detect a moving object in the surrounding environment and generate a wake-up signal and an initial position of the moving object in response to detecting the moving object, wherein the motion detection device is further configured to transmit a wake-up signal to the imaging device in the first mode and transmit the information related to the initial position to the pan-tilt device in response to detecting a moving object, wherein the pan-tilt device is further configured to rotate to adjust the imaging orientation of the imaging device toward the moving object in response to the received information related to the initial position before the imaging device completes the switching from the first mode in which the imaging device consumes less power than in the second mode to the second mode.

According to another aspect of the present disclosure, there is provided an electronic apparatus comprising the monitoring equipment as described above or the driving equipment as described above.

A monitoring system comprising a monitoring subsystem, a communication network subsystem, a server subsystem, a display subsystem, wherein, the monitoring subsystem comprises: an imaging device configured to be in a first mode or a second mode, wherein the imaging device consumes less power in the first mode than in the second mode and captures images in the second mode, a pan-tilt device configured to rotate to adjust an imaging orientation of the imaging device, a motion detection device configured to detect a moving object in the surrounding environment and generate a wake-up signal and an initial position of the moving object in response to detecting the moving object, a communication device connected with the communication network subsystem, wherein the motion detection device is further configured to transmit the wake-up signal to the imaging device in the first mode and transmit information related to the initial position to the pan-tilt device in response to detecting the moving object, wherein the imaging device is further configured to switch from the first mode to the second mode in response to the received wake-up signal, wherein the pan-tilt device is further configured to rotate to adjust the imaging orientation of the imaging device toward the moving object in response to the received information related to the initial position before the imaging device completes the switching from the first mode to the second mode, wherein the communication network subsystem is configured to communicate data among the monitoring subsystem, the server subsystem and the display subsystem; wherein the server subsystem is configured to store or analyse the data transmitted by the monitoring subsystem; wherein the display subsystem is configured to display data transmitted by the monitoring subsystem or the server subsystem.

At least based on the above embodiments of the present disclosure, an improved mechanism for monitoring equipment to reduce the power consumption and guarantee the security level of monitoring equipment are provided.

### BRIEF DESCRIPTION OF DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements. In the accompanying drawings.
Figs. 1A -1B are schematic diagrams illustrating an exemplary monitoring equipment;
Fig. 2 is schematic diagram illustrating an exemplary monitoring equipment according to an embodiment of the present disclosure;
Figs. 3A -3C are schematic diagrams illustrating an exemplary operations of monitoring equipment according to an embodiment of the present disclosure;
Fig. 4 is a schematic diagram illustrating the operation flowchart of the monitoring equipment according to an embodiment of the present disclosure;
Fig. 5 is a schematic diagram illustrating the operation timing of the monitoring equipment according to an embodiment of the present disclosure;
Fig. 6 is schematic diagram illustrating another exemplary monitoring equipment according to an embodiment of the present disclosure;
Fig. 7 is schematic diagram illustrating the monitoring system according to an embodiment of the present disclosure;
Fig. 8 is a schematic flowchart illustrating the method for a monitoring equipment according to an embodiment of the present disclosure;
Fig. 9 is schematic diagram illustrating the driving equipment according to an embodiment of the present disclosure;
Fig. 10 is a schematic block diagram of an electronic apparatus according to one embodiment of the present disclosure.

### DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that orientations or positional relationships indicated by terms such as "center", "upper", "lower", "left", "right", "vertical", "horizontal", "top", "bottom", "internal", "external", "inside" and "outside" are based on orientations or positional relationships shown in the drawings, only for the convenience of describing the present disclosure and simplifying the description, instead of indicating or implying the indicated equipment or element must have a particular orientation. In addition, terms such as "first", "second" and "third" are only for descriptive purposes, and cannot be understood as indicating or implying relative importance. Likewise, words like "a", "an" or "the" do not represent a quantity limit, but represent an existence of at least one. Words like "include" or "comprise" mean that an element or an object in front of the said word encompasses those ones listed following the said word and their equivalents, without excluding other elements or objects. Words like "connect" or "link" are not limited to physical or mechanical connections, but may include electrical connections, whether direct or indirect connections.

In the description of the present disclosure, it should be noted that, unless otherwise explicitly specified and limited, terms such as "mount", "link" and "connect" should be understood in a broad sense. For example, such terms may refer to being fixedly connected, or detachably connected, or integrally connected; may refer to being mechanically connected, or electrically connected; may refer to being directly connected, or indirectly connected via an intermediate medium, or internally connected inside two elements. For ordinary skilled in the art, the meanings of the above terms in the present disclosure may be understood on a case-by-case basis.

In addition, technical features involved in different embodiments of the present disclosure may be combined with each other as long as no conflicts occurs therebetween.

Some of the drawings may not depict all the components of a given method, equipment and system. Like reference numerals may be used to denote like features throughout the specification and drawings.

At present, in the field of monitoring equipment, motion sensors and pan/tilt are used more and more widely. An important feature of monitoring equipment with motion sensor is low power consumption. The monitoring equipment with motion sensor can detect the monitoring object and determine the position information of the monitoring object by the motion sensor in a low power consumption state. The monitoring equipment with motion sensor can wake up to capture images and perform other functions when necessary, and enter the state of full power consumption.

For the monitoring equipment without pan/tilt, the monitoring direction and scope are limited after installation and fixation. If there is a large area to be monitored, it may be necessary to install multiple monitoring equipment, which increases the cost. The monitoring equipment with pan/tilt can set its monitoring direction according to the actual needs, such as through software, and can also track the target through image detection technology to determine the monitoring direction. In this way, the monitoring direction can be determined according to actual needs, so the monitoring range is greatly increased.

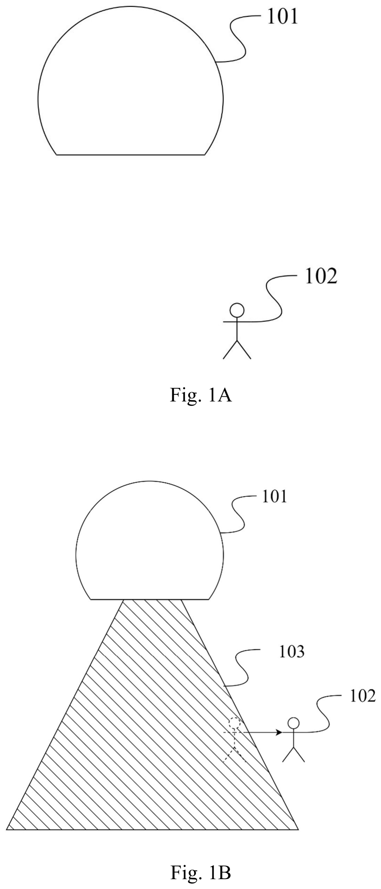

Figs. 1A -1B are schematic diagrams illustrating an exemplary monitoring equipment.

Referring to Fig. 1A, monitoring equipment 101 may include an imaging device, a pan-tilt device and a motion detection device. As shown in the Fig. 1A, the monitoring equipment 101 may be in the low power consumption mode. The imaging device may not capture images in the low power consumption mode to reduce the power consumption.

The motion detection device may detect a moving object 102. In response to detecting the moving object 102, the motion detection device may wake up the monitoring equipment 101 to capture images. That is, the motion detection device may wake up the imaging device.

Referring to Fig. 1B, monitoring equipment 101 is waken up. After being waken up, the imaging device may capture images of the environments and process and analyze the images to determine the position of the moving object 102. The imaging device may drive the pan-tilt device to rotate based on the position of the moving object 102 so as to track the moving object 102.

However, the time elapses during the monitoring equipment 101 is waken up from the low power consumption which is also called as delay response time may be long and the field of vision of imaging device may be narrow and the moving speed of the moving object 102 may be fast. In this case, the moving object 102 may go beyond the field of vision 103 of the imaging device before the monitoring equipment 101 is waken up. That is, before the imaging device is waken up to capture images to determine the position of the moving object 102, the moving object 102 may go beyond the field of vision 103 of the imaging device. If the imaging device cannot capture images including the moving object 102, the monitoring equipment 101 cannot track the moving object 102. Thus, the monitoring equipment 101 may not effectively monitor the surrounding environment and the moving object 102, and there is a problem of missing detection. The security level of monitoring equipment 101 cannot be guaranteed.

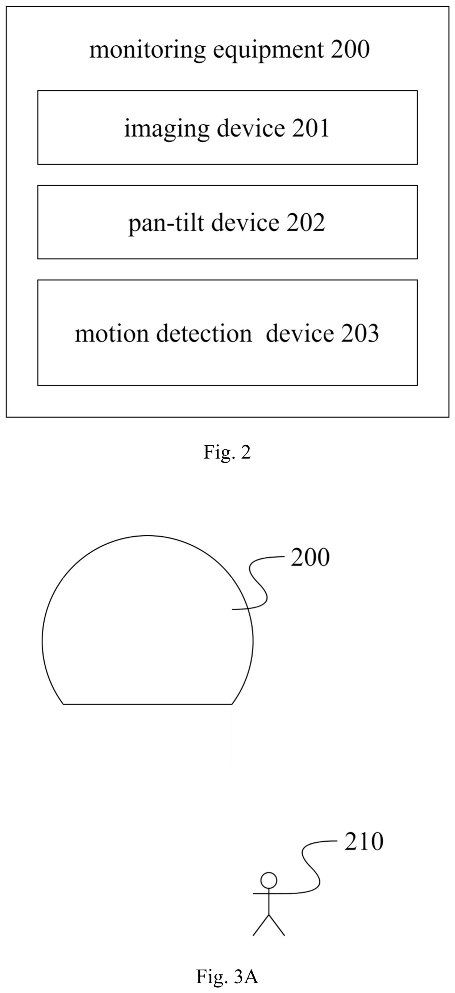

Fig. 2 is schematic diagram illustrating an exemplary monitoring equipment according to an embodiment of the present disclosure.

Figs. 3A -3C are schematic diagrams illustrating an exemplary operations of monitoring equipment according to an embodiment of the present disclosure.

Referring to Fig. 2, monitoring equipment 200 includes an imaging device 201, a pan-tilt device 202 and a motion detection device 203. The monitoring equipment 200 may monitor the surrounding environment and detect potential security threats. The monitoring equipment 200 can perform object detection, object tracking, object image capture, message push, and image data storage/transmission.

The monitoring equipment 200 may be in two modes. The monitoring equipment 200 may not capture images of surrounding environment by the imaging device 201 in the first mode to reduce the power consumption. The monitoring equipment 200 may capture images of surrounding environment by the imaging device 201 in the second mode to record and track the moving object. That is, the imaging device 201 may be in two modes. The imaging device 201 may consume less power in the first mode than in the second mode and captures image in the second mode. The first mode indicates that the monitoring equipment 200, especially the imaging device 201, is in a low power consumption mode, or the imaging device 201 is power-off. The second mode indicates that the monitoring equipment 200, especially the imaging device 201, is in a full power consumption mode or in a mode that the imaging device 201 may capture images of surrounding environment. The images captured by the imaging device 201 may include still images and dynamic images such as image streams or videos.

The imaging device 201 may include an image sensor, a lens, a central processing unit, a memory and other components. The imaging device 201 can run image processing software, algorithms and the like. When the imaging device 201 is in the second mode, all components of the imaging device 201 may be in working state, and the power consumption of the imaging device 201 is high. When the imaging device 201 is in the first mode, at least a part of components included in the imaging device 201 are in a dormant state, and the power consumption of the imaging device 201 is low. The image sensor may include one or more of Charge Coupled Equipment (CCD) image sensor, Complementary Metal Oxide Semiconductor (CMOS) image sensor, Time of Flight (3D ToF) image sensor, Thermal Image Sensor and so on, but the disclosure is not limited thereto.

The pan-tilt device 202 may include one or more motor. The pan-tilt device 202 may control the rotation direction and angle of the imaging device 201 or other device. Depending on the design of the pan-tilt device 202, the motor may include one or more rotating shafts, each of which is driven by a motor. The pan-tilt device 202 receive instructions to realize accurate rotation control. The pan-tilt device 202 may be physically associated with the imaging device 201. When the pan-tilt device 202 rotates, the imaging device 201 may also rotate with the pan-tilt device 202 to adjust the imaging orientation of the imaging device 201. In one embodiment, the pan-tilt device 202 may be physically associated with the motion detection device 203. When the pan-tilt device 202 rotates, the motion detection device 203 may also rotate with the pan-tilt device 202. In another embodiment, the pan-tilt device 202 may be not physically associated with the motion detection device 203. When the pan-tilt device 202 rotates, the motion detection device 203 may not rotate with the pan-tilt device 202.

The motion detection device 203 may include one or more sensors such as low power image sensor, passive infrared sensor (PIR), radar, ultrasonic wave sensor and so on. The motion detection device 203 may detect a moving object in the surrounding environment. For example, when the motion detection device 203 detects the moving object, the motion detection device 203 may generate a wake-up signal and an initial position of the moving object. The motion detection device 203 may transmit the wake-up signal to the imaging device 201 in the first mode and transmit information related to the initial position to the pan-tilt device 202 in response to detecting the moving object.

By referring to the Figs. 3A-3C, the configurations of the monitoring equipment 200 is further described.

In the Fig. 3A, when the motion detection device 203 included in the monitoring equipment 200 may detect the moving object 210, the motion detection device 203 may generate a wake-up signal and an initial position of the moving object 210. The motion detection device 203 may transmit the wake-up signal to the imaging device 201 in the first mode and may transmit information related to the initial position to the pan-tilt device 202 in response to detecting the moving object 210.

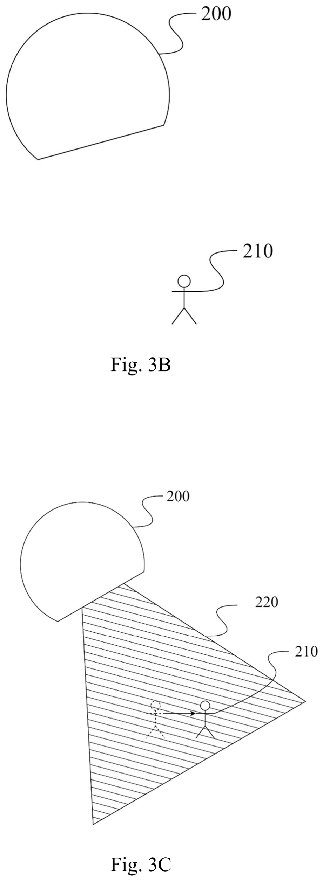

In the Fig. 3B, the pan-tilt device 202 included in the monitoring equipment 200 may rotate to adjust the imaging orientation of the imaging device 201 toward the moving object 210 in response to the received information related to the initial position before the imaging device 201 completes the switching from the first mode to the second mode. For example, when the pan-tilt device 202 may start to rotate to adjust the imaging orientation of the imaging device 201 toward the moving object 210, for the imaging device 201 in the low power consumption mode, the imaging device 201 may have not completed the switch from the low power consumption mode to the second mode or the full power consumption mode. As another example, when the pan-tilt device 202 may start to rotate to adjust the imaging orientation of the imaging device 201 toward the moving object 210, for the imaging device 201 in the power-off mode, the imaging device 201 may have not be powered on and complete the initialization process. The pan-tilt device 202 may rotate to adjust the imaging orientation of the imaging device 201 to align the centre of the field of view of the imaging device 201 with the moving object 210 as much as possible.

The time elapses during the imaging device 201 switch from the first mode to the second mode may be long and the field of vision of imaging device 201 may be narrow and the moving speed of the moving object 210 may be fast. However, as shown in the Fig. 3B, before the imaging device 201 completes the switching from the first mode to the second mode, the monitoring equipment 200 may start to rotate to track the moving object 210.

In the Fig. 3B, the imaging device 201 may switch from the first mode to the second mode in response to the received wake-up signal. As shown in the Fig. 3C, the moving object 210 move a distance during the during the imaging device 201 switch from the first mode to the second mode. The pan-tilt device 202 included in the monitoring equipment 200 may rotate to adjust the imaging orientation of the imaging device 201 toward the moving object 210 before the imaging device 201 completes the switching to the second mode. Thus, when the imaging device 201 captures images in the second mode, the moving object 210 moving a distance is still in the field of vision 220 of the imaging device 201, for example, the moving object 210 may be positioned at the centre of the field of view 220 of the imaging device 201. The monitoring equipment 200 may effectively monitor the surrounding environment and the moving object 210 and reduce the power consumption. The problem of missing detection is solved or alleviated. The security level of monitoring equipment 200 can be guaranteed.

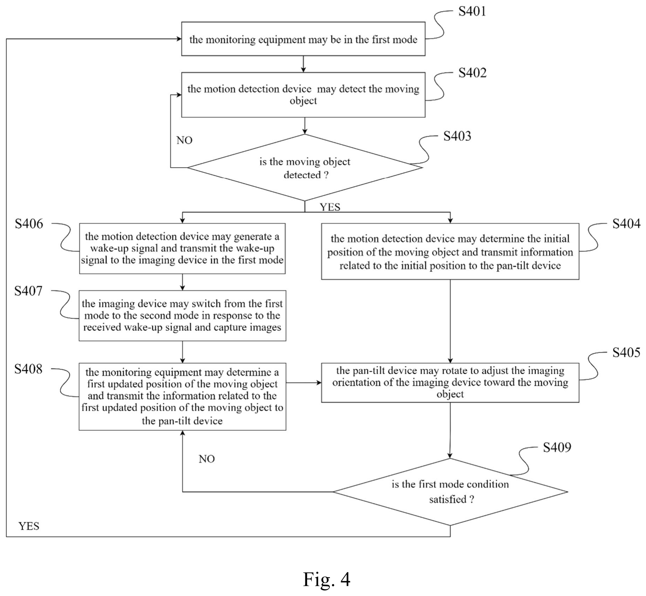

Fig. 4 is a schematic diagram illustrating the operation flowchart of the monitoring equipment according to an embodiment of the present disclosure.

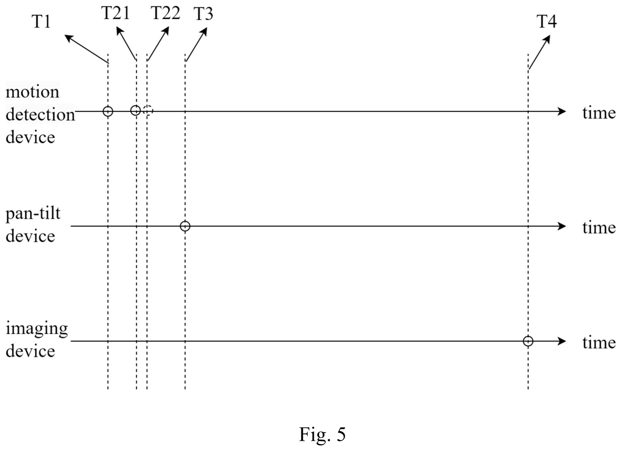

Fig. 5 is a schematic diagram illustrating the operation timing of the monitoring equipment according to an embodiment of the present disclosure.

By referring to the Fig. 4, in the S401, the monitoring equipment may be in the first mode. That is, the monitoring equipment may be in the low power consumption mode or in the power-off mode.

In the S402, the motion detection device included in the monitoring equipment may detect the moving object.

In the S403, the motion detection device included in the monitoring equipment may determine whether the moving object is detected. If the moving object is not detected, the flow goes back to the S402. If the moving object is detected, the flow goes to the S404 and S405. For example, by referring to the Fig. 5, the motion detection device may detect the moving object at time T1 in Fig. 5.

By referring to Fig. 4, in the S404, the motion detection device may determine the initial position of the moving object and transmit information related to the initial position to the pan-tilt device in response to detecting the moving object. In one embodiment, the information related to the initial position may include the initial position of the moving object. In another embodiment, the information related to the initial position may include one or more of a rotation speed, a rotation direction and a rotation angle of the pan-tilt motor. That is, the motion detection device may include components for performing data storage and processing functions. For example, the motion detection device may determine one or more of a rotation speed, a rotation direction and a rotation angle of the pan-tilt motor by comparing the initial position of the moving object and the pose of the imaging device or the pan-tilt device. By referring to Fig. 5, the motion detection device may transmit the information related to the initial position to the pan-tilt device at time T21 or time T22.

Alternatively or additionally, by referring to the Fig. 5, the motion detection device may track the moving object during T3 and T4. The motion detection device may be not physically associated with the pan-tilt device. The motion detection device may transmit the position of the moving object to the pan-tilt device during T3 and T4 a lot of times. Thus, the pan-tilt device may dynamically adjust the imaging orientation of the imaging device toward the moving object.

By referring to Fig. 4, in the S405, the pan-tilt device may rotate to adjust the imaging orientation of the imaging device toward the moving object. For example, the pan-tilt device may rotate according to the information related to the initial position of the moving object. In one embodiment, the pan-tilt device may determine one or more of a rotation speed, a rotation direction and a rotation angle of the pan-tilt motor based on the initial position of the moving object. For example, the pan-tilt device may determine one or more of a rotation speed, a rotation direction and a rotation angle of the pan-tilt motor by comparing the initial position of the moving object and the pose of the imaging device or the pan-tilt device. The pan-tilt device may rotate based on one or more of the rotation speed, the rotation direction and the rotation angle of the pan-tilt motor. In another embodiment, the pan-tilt device may rotate based on one or more of the rotation speed, the rotation direction and the rotation angle of the pan-tilt motor. By referring to Fig. 5, pan-tilt device may start to rotate at time T3. The period between T3 and T1 may be very short, for example, it may be 100ms or less or more.

By referring to Fig. 4, in the S406, the motion detection device may generate a wake-up signal and transmit the wake-up signal to the imaging device in the first mode. In one embodiment, the motion detection device may simultaneously transmit the wake-up signal to the imaging device in the first mode and transmit the information related to the initial position to the pan-tilt device in response to detecting the moving object. For example, by referring to the Fig. 5, the motion detection device may both transmit the wake-up signal to the imaging device in the first mode and transmit the information related to the initial position to the pan-tilt device at time T21 (or time T22). In another embodiment, the motion detection device may firstly transmit one of the wake-up signal and the information related to the initial position, then the motion detection device may transmit the other one of the wake-up signal and the information related to the initial position. For example, by referring to the Fig. 5, the motion detection device may transmit the wake-up signal to the imaging device in the first mode at time T21, and transmit the information related to the initial position to the pan-tilt device at time T22. Similarly, the motion detection device may also transmit the wake-up signal to the imaging device in the first mode at time T22, and transmit the information related to the initial position to the pan-tilt device at time T21.

By referring to Fig. 4, in the S407, the imaging device may switch from the first mode to the second mode in response to the received wake-up signal and capture images. For example, by referring to the Fig. 5, the imaging device may complete the switching from the first mode to the second mode at time T4. The pan-tilt device may rotate to adjust the imaging orientation of the imaging device toward the moving object during the period between T3 and T4. The period between time T1 and time T3 may be shorter a lot than the period between time T1 and time T4. That is, the pan-tilt device may start to rotate to adjust the imaging orientation of the imaging device toward the moving object at time T3 which is before the time T4 that the imaging device completes the switching from the first mode to the second mode. Thus, when the imaging device start to capture the images of surround environment, the moving object is still in the field of vision of the imaging device.

By referring to Fig. 4, in the S408, the monitoring equipment may determine a first updated position of the moving object and transmit the information related to the first updated position of the moving object to the pan-tilt device. For example, the monitoring equipment may determine a first updated position of the moving object based on the images captured by the imaging device. In one embodiment, the information related to the first updated position may include the first updated position of the moving object. In another embodiment, the information related to the first updated position may include one or more of a rotation speed, a rotation direction and a rotation angle of the pan-tilt motor.

In one embodiment, the motion detection device may transmit the information related to the initial position to the imaging device. The imaging device may determine the first updated position of the moving object based on the information related to the initial position by a vision detection algorithm. The imaging device may detect one or more candidate objects in the images captured by the imaging device by the vision detection algorithm. For example, the vision detection algorithm may include supervised learning method based on support vector machine, K nearest neighbor algorithm based on clustering, and Yolo algorithms based on CNN and so on. The imaging device may determine a deviation among the positions of the one or more candidate objects and the initial position of the moving object based on the information related to the initial position. For example, the imaging device may determine a distance deviation and an angle deviation among the positions of the one or more candidate objects and the initial position of the moving object based on the information related to the initial position. The imaging device may select a candidate object from the one or more candidate objects based on the deviation. For example, the imaging device may select a candidate object with minor deviation among the one or more candidate objects. The imaging device may determine the position of the selected candidate object as the first updated position of the moving object. The first updated position of the moving object may be more accurate than the initial position of the moving object.

In another embodiment, the imaging device may determine the first updated position of the moving object based on the different frames of the images captured by the imaging device. The imaging device may determine one candidate objects in the images captured by the imaging device by analyzing the different frames of the images with the vision detection algorithm. The vision detection algorithm may include the Frame Difference Method, Continuous Frame Difference Method, Optical Flow Method and so on. The imaging device may determine the position of the determined candidate object as the first updated position of the moving object. The first updated position of the moving object may be more accurate than the initial position of the moving object.

In yet another embodiment, the monitoring equipment may transmit the image captured by the imaging device to a server. In addition to or alternatively, the monitoring equipment may transmit the information related to the initial position determined by the motion detection device to the server. The monitoring equipment may receive the information related to the first updated position of the moving object from the server. That is, the vision detection algorithm may be run on the server. In the case that network bandwidth is large and communication delay is small, the first updated position of the moving object determined on the server may be more accurate than determined in the imaging device, since the server may run a more complex vision detection algorithm with sufficient computing resources.

The flow goes to the S405, the pan-tilt device may rotate to adjust the imaging orientation of the imaging device toward the moving object, for example, based on the information related to the first updated position. In one embodiment, the pan-tilt device may determine one or more of a rotation speed, a rotation direction and a rotation angle of the pan-tilt motor based on the first updated position of the moving object, and rotate based on one or more of the rotation speed, the rotation direction and the rotation angle of the pan-tilt motor. In another embodiment, the pan-tilt device may rotate based on one or more of the rotation speed, the rotation direction and the rotation angle of the pan-tilt motor.

In the S409, the monitoring equipment or imaging device may determine whether the first mode condition is satisfied. The first mode condition indicates that the monitoring equipment or the imaging device may switch from the second mode to the first mode. If the first mode condition is not satisfied, the flow goes to the S408. If the first mode condition is satisfied, the flow goes to the S401.

Specially, the first mode condition may comprise the image device has been in the second mode for more than a threshold time. For example, the if the image device has been in the second mode for more than 3, 5, 10, 15 minutes and so on, the monitoring equipment or the imaging device may switch from the second mode to the first mode.

The first mode condition may comprise the number of frames of image captured by the imaging device for the moving object is greater than a threshold number of frames. For example, if the image device has captured 10, 20, 30 and so on frames of images, the monitoring equipment or the imaging device may switch from the second mode to the first mode.

The first mode condition may comprise the distance between the moving object and a reference position is greater than a threshold distance. For example, if the distance between the moving object and a reference position is greater than 5, 10, 15 m, the monitoring equipment or the imaging device may switch from the second mode to the first mode. The reference position may be or may be not same as the position of the monitoring equipment.

The first mode condition may comprise the user instruction. For example, if the monitoring equipment receives a user instruction indicating that the monitoring equipment or the imaging device switch from the second mode to the first mode, the monitoring equipment or the imaging device may switch to the first mode.

The first mode condition may comprise the moving object disappears from the field of view of the imaging device.

Alternatively or additionally, after the monitoring equipment or the imaging device is switched to the second mode, the motion detection device may determine a second updated position of the moving object. That is, after the monitoring equipment or the imaging device is switched to the second mode, the motion detection device may still track the moving object. In this case, the motion detection device may be not physically associated with the motion detection device. The motion detection device may transmit the information related to the second updated position to the pan-tilt device.

The pan-tilt device is configured to rotate to adjust the imaging orientation of the imaging device toward the moving object based on the information related to the first updated position and the information related to the second updated position. For example, the pan-tilt device may verify the information related to the first updated position and the information related to the second updated position against each other. For example, the pan-tilt device may weight the information related to the first updated position and the information related to the second updated position so as to determine how to rotate to adjust the imaging orientation of the imaging device. For example, the pan-tilt device may use the newer one of the information related to the first updated position and the information related to the second updated position to rotate.

Alternatively or additionally, after the monitoring equipment or the imaging device is switched to the second mode, the motion detection device may determine a second updated position of the moving object. In this case, the motion detection device may be not physically associated with the motion detection device. The motion detection device may transmit the information related to the second updated position to the imaging device. The imaging device may generate the information related to the first updated position based on the information related to the second updated position.

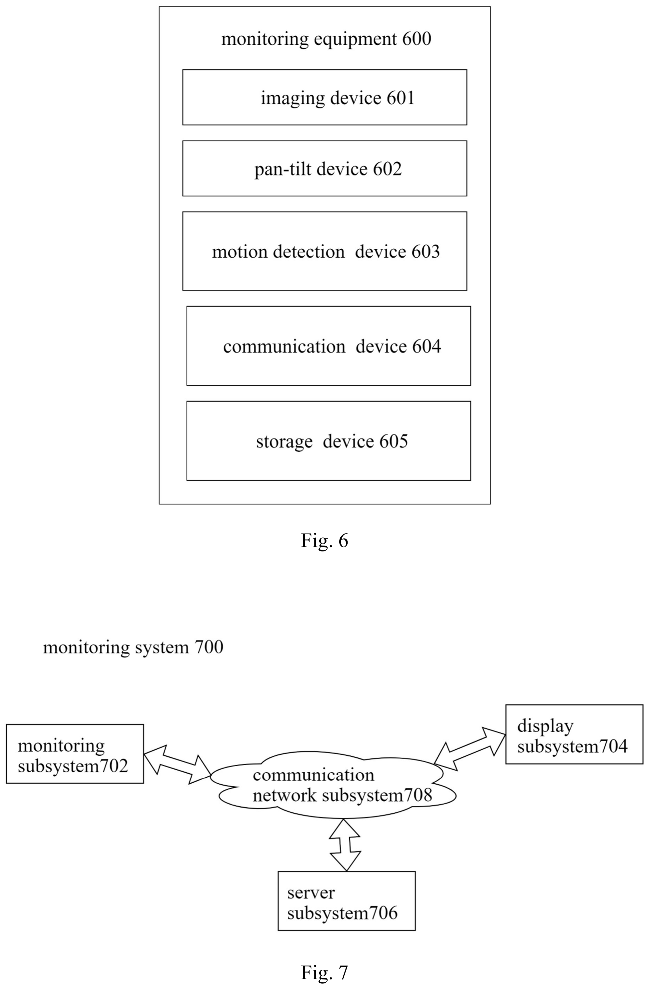

Fig. 6 is schematic diagram illustrating another exemplary monitoring equipment according to an embodiment of the present disclosure. In order to avoid redundancy, the same components in Fig. 6 as those in Fig. 2 are not repeated.

The monitoring equipment 600 further includes a communication device 604 and a storage device 605.

The communication device 604 to facilitate communication with other computing equipment, for example the client computing equipment such as display subsystem described below and server computing equipment such as server subsystem described below. The communication device 604 may transmit the captured images to the client computing equipment and server computing equipment. The communication device 604 may receive the information related to the first updated position of the moving object or other instructions from the server computing equipment. The wireless network connections may include short range communication protocols such as Bluetooth, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

The storage device 605 stores information generated or used by the monitoring equipment including images, videos captured by the imaging device, instructions and so on. The storage device 605 may be of any type capable of storing information accessible by the monitoring equipment, including a computing equipment-readable medium, or other medium that stores data that may be read with the aid of an electronic equipment, such as a hard-drive, memory card, ROM, RAM, DVD or other optical disks, as well as other write-capable and read-only memories.

Fig. 7 is schematic diagram illustrating the monitoring system according to an embodiment of the present disclosure.

As shown in the Fig. 7, the monitoring system 700 includes monitoring subsystem 702, display subsystem 704, server subsystem706, and communication network subsystem708. The monitoring subsystem 702, display subsystem 704, server subsystem 706 are connected by the communication network subsystem708.

The monitoring subsystem 702 may be configured the same as or similarly to or include the monitoring equipment 200 described in the Fig. 2. Although only a monitoring subsystem 702, a display subsystem 704, and a server subsystem706 are depicted for simplicity, a typical system may include significantly more.

The monitoring subsystem 702 may include an imaging device configured to be in a first mode or a second mode, wherein the imaging device consumes less power in the first mode than in the second mode and captures image in the second mode, a pan-tilt device configured to rotate to adjust an imaging orientation of the imaging device, a motion detection device configured to detect a moving object in the surrounding environment and generate a wake-up signal and an initial position of the moving object in response to detecting the moving object, a communication device connected with the communication network subsystem. The motion detection device may transmit the wake-up signal to the imaging device in the first mode and transmit information related to the initial position to the pan-tilt device in response to detecting the moving object. The imaging device may switch from the first mode to the second mode in response to the received wake-up signal. The pan-tilt device may rotate to adjust the imaging orientation of the imaging device toward the moving object in response to the received information related to the initial position before the imaging device completes the switching from the first mode to the second mode.

The communication network subsystem 708 is configured to communicate data among the monitoring subsystem 702, the server subsystem 704 and the display subsystem 706. The communication network subsystem 708 may include various configurations and protocols including short range communication protocols such as Bluetooth, Bluetooth LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any equipment capable of transmitting data to and from other computing equipment, such as modems and wireless interfaces. The communication network subsystem 708 includes a router/base station to which the monitoring subsystem 702 is directly connected. The communication network subsystem 708 can be a part of the public Internet or a private network built by users themselves.

The server subsystem 706 is configured to store or analyze the data transmitted by the monitoring subsystem 702, such as message and image data including video. The server subsystem 706 may include one or more server computing equipment having a plurality of computing equipment, e.g., a load balanced server farm, that exchange information with different nodes of a network for the purpose of receiving, processing and transmitting the data to and from other computing equipment. For instance, the server subsystem 706 may include one or more server computing equipment that are capable of communicating with monitoring subsystem 702 and display subsystem 704 via the communication network subsystem 708.

The display subsystem 704 may display data transmitted by the monitoring subsystem 702 or the server subsystem 706. The display subsystem 704 may be a personal computing equipment intended for use by a user, and have all of the components normally used in connection with a personal computing equipment including a one or more processors (e.g., a central processing unit (CPU)), memory (e.g., RAM and internal hard drives) storing data and instructions, a display (e.g., a touch-screen, a projector, a television, or other equipment that is operable to display information). The display subsystem 704 may include user input equipment (e.g., a mouse, keyboard, touchscreen or microphone). The display subsystem 704 may be used to set the parameter of the the monitoring subsystem 702 or transmit instruction to the monitoring subsystem 702.

Alternatively or additionally, when detecting a moving object, the monitoring equipment may transmit the result of detection including the images to the server subsystem 706 or the display subsystem 704. The server subsystem 706 may forward the result of detection including the images to the display subsystem 704.

The server subsystem 706 may store images captured by the monitoring subsystem 702, for example, through cloud storage. The server subsystem 706 may help user to store images for a long time to avoid the loss of local data. Users can view images/videos by the display subsystem 704 and the communication network subsystem 708 to achieve faster response.

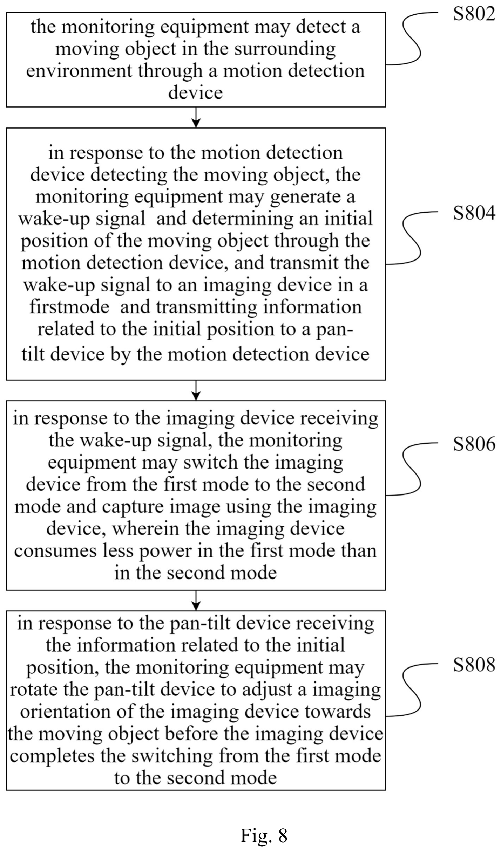

Fig. 8 is a schematic flowchart illustrating the method for a monitoring equipment according to an embodiment of the present disclosure. The monitoring equipment may comprise an imaging device, a pan-tilt device and a motion detection device. The method may include S802-S808.

At S802, the monitoring equipment may detect a moving object in the surrounding environment through a motion detection device.

At S804, in response to the motion detection device detecting the moving object, the monitoring equipment may generate a wake-up signal and determine an initial position of the moving object by the motion detection device, and transmit the wake-up signal to an imaging device in a first mode and transmitting information related to the initial position to the pan-tilt device by the motion detection device.

At S806, in response to the imaging device receiving the wake-up signal, the monitoring equipment may switch the imaging device from the first mode to the second mode and capture image using the imaging device, wherein the imaging device consumes less power in the first mode than in the second mode.

At S808, in response to the pan-tilt device receiving the information related to the initial position, the monitoring equipment may rotate the pan-tilt device to adjust an imaging orientation of the imaging device towards the moving object before the imaging device completes the switching from the first mode to the second mode.

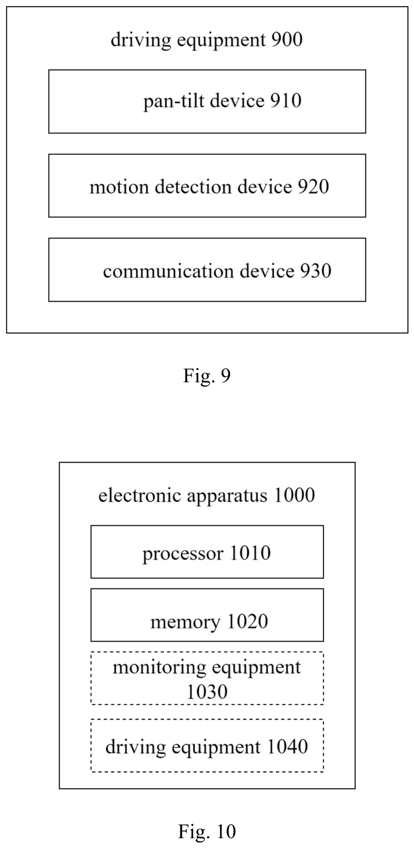

Fig. 9 is schematic diagram illustrating the driving equipment according to an embodiment of the present disclosure.

The driving equipment 900 may be coupled to an imaging device. As shown in the Fig. 9, the driving equipment 900 may comprises a pan-tilt device 910, a motion detection device 920, a communication device 930.

The pan-tilt device may rotate to adjust an imaging orientation of the imaging device. The motion detection device may detect a moving object in the surrounding environment and generate a wake-up signal and an initial position of the moving object in response to detecting the moving object. The communication device may be coupled to the imaging device. The motion detection device may transmit a wake-up signal to the imaging device in the first mode by the communication device and transmit the information related to the initial position to the pan-tilt device in response to detecting a moving object. The pan-tilt device may rotate to adjust the imaging orientation of the imaging device toward the moving object in response to the received information related to the initial position before the imaging device completes the switching from the first mode in which the imaging device consumes less power than in the second mode to the second mode.

The present disclosure provides a non-transitory computer-readable medium on which computer instructions are stored, which, when executed by a processor, perform one or more steps of various methods and their additional aspects as described above.

Illustratively, the non-transitory computer-readable medium can be any combination of one or more computer-readable storage media, for example, one computer-readable storage medium contains program codes for executing the above various methods.

Illustratively, when the program code is read by a computer, the computer can execute the program code stored in the computer storage medium, and perform one or more steps to realize, for example, the above-mentioned various methods and their additional aspects according to at least one embodiment of the present disclosure.

Illustratively, the non-transitory computer-readable medium may include a memory card of a smart phone, a storage part of a tablet computer, a hard disk of a personal computer, a random access memory (RAM), a read-only memory (ROM), an erasable programmable read-only memory (EPROM), a portable compact disk read-only memory (CD-ROM), a flash memory, and other non-transitory readable storage media or any combination thereof.

Fig. 10 is a schematic block diagram of an electronic apparatus according to one embodiment of the present disclosure. It should be noted that electronic apparatus 1000 depicted in Fig. 10 may be used to perform the operations of controlling monitoring equipment as described in the above.

As shown in Fig. 10, electronic apparatus 1000 may comprise processor 1010 and memory 1020 and optional monitoring equipment 1030 and driving equipment 1040. Processor 1010 is communicatively coupled with the memory and configured to perform the method discussed above.

Examples of processor 1010 comprise microprocessors, microcontrollers, digital signal processors (DSPs), field programmable gate arrays (FPGAs), programmable logic equipment (PLDs), state machines, gated logic, discrete hardware circuits, and other suitable hardware configured to perform the various functionality described throughout this disclosure.

Processor 1010 may execute software. Software shall be construed broadly to mean instructions, instruction sets, code, code segments, program code, programs, subprograms, software devices, applications, software applications, software packages, routines, subroutines, objects, executables, threads of execution, procedures, functions, etc., whether referred to as software, firmware, middleware, microcode, hardware description language, or otherwise. The software may reside on memory 1020.

Memory 1020 may be a non-transitory computer-readable medium. A non-transitory computer-readable medium includes, by way of example, a magnetic storage equipment (e.g., hard disk, floppy disk, magnetic strip), an optical disk (e.g., a compact disc (CD) or a digital versatile disc (DVD)), a smart card, a flash memory equipment (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. Memory 1020 may reside in processor 1010, external to processor 1010, or distributed across multiple entities including processor 1010. Memory 1020 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

The monitoring equipment 1030 may be configured similarly to or same as the monitoring equipment 200 or monitoring equipment 600 and driving equipment 1040 may be configured similarly to or same as the driving equipment 900.

The electronic apparatus 1000 may be, for example, a system-on-a-chip (SOC) or a equipment including the SOC, such as a mobile phone, a tablet computer, a notebook computer, an e-book, a game machine, a TV set, a digital photo frame, a navigator, a home appliance, a communication base station, an industrial controller, a server, or any combination of data processing equipment and hardware, and the embodiment of the present disclosure does not limit this.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

An expression such as "according to", "based on", "depend on", and so on as used in the disclosure does not mean "according only to", "based only on", or "dependent only on", unless it is explicitly otherwise stated. In other words, such expression generally means "according at least to", "based at least on", or "depend at least on" in the disclosure.

Any reference in the disclosure to an element using the designation "first", "second" and so forth is not intended to comprehensively limit the number or order of such elements. These expressions may be used in the disclosure as a convenient method for distinguishing two or more units. Thus, a reference to a first unit and a second unit does not imply that only two units may be employed or that the first unit must precede the second unit in some form.

The term "determining" used in the disclosure may include various operations. For example, regarding "determining", calculating, computing, processing, deriving, investigating, looking up (e.g., looking up in tables, databases, or other data structure), ascertaining, and so forth are regarded as "determination". In addition, regarding "determining", receiving (for example, receiving information), transmitting (for example, transmitting information), input, output, accessing (for example, access to data in the memory), and so forth, are also regarded as "determining". In addition, regarding "determining", resolving, selecting, choosing, establishing, comparing, and so forth may also be regarded as "determining". That is, regarding "determining", several actions may be regarded as "determining".

The terms such as "connected", "coupled" or any of their variants used in the disclosure refer to any connection or combination, direct or indirect, between two or more units, which may include the following situations: between two units that are "connected" or "coupled" with each other, there are one or more intermediate units. The coupling or connection between the units may be physical or logical or may also be a combination of the two. As used in the disclosure, two units may be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims "including", "comprising", and variations thereof, these terms are as open-ended as the term "having". Further, the term "or" used in the disclosure or in the claims is not an exclusive-or.

It should be noted that the above description is only some embodiments of the present disclosure and an illustration of the applied technical principles. It should be understood by those skilled in the art that the present disclosure scope involved in the present disclosure is not limited to the technical solutions resulting from specific combinations of the above technical features, but also encompasses other technical solutions resulting from any combination of the above technical features or their equivalents without departing from the above disclosed concept, for example, the technical solutions formed by replacing between the above features and the technical features with similar functions disclosed in the present disclosure (but not limited hereto).

The present disclosure has been described in detail above, but it is obvious to those skilled in the art that the present disclosure is not limited to the embodiments described in the disclosure. The present disclosure may be implemented as a modified and changed form without departing from the spirit and scope of the present disclosure defined by the description of the claims. Therefore, the description in the disclosure is for illustration and does not have any limiting meaning to the present disclosure.

## Claims

1. A monitoring equipment comprising:
an imaging device configured to be in a first mode or a second mode, wherein the imaging device consumes less power in the first mode than in the second mode and captures images in the second mode;
a pan-tilt device configured to rotate to adjust an imaging orientation of the imaging device; and
a motion detection device configured to detect a moving object and generate a wake-up signal and an initial position of the moving object in response to detecting the moving object;
wherein the motion detection device is further configured to transmit the wake-up signal to the imaging device in the first mode and transmit information related to the initial position to the pan-tilt device in response to detecting the moving object,
wherein the imaging device is further configured to switch from the first mode to the second mode in response to the received wake-up signal, and
wherein the pan-tilt device is further configured to rotate to adjust the imaging orientation of the imaging device toward the moving object in response to the received information related to the initial position before the imaging device completes the switching from the first mode to the second mode.

2. The monitoring equipment according to claim 1, wherein the motion detection device is further configured to simultaneously transmit the wake-up signal to the imaging device in the first mode and transmit the information related to the initial position to the pan-tilt device in response to detecting the moving object.

3. The monitoring equipment according to claim 1, wherein the information related to the initial position includes the initial position of the moving object, and
wherein the pan-tilt device is further configured to determine one or more of a rotation speed, a rotation direction and a rotation angle of the pan-tilt motor based on the initial position of the moving object, and rotate based on one or more of the rotation speed, the rotation direction and the rotation angle of the pan-tilt motor.

4. The monitoring equipment according to claim 1, wherein the information related to the initial position includes one or more of a rotation speed, a rotation direction and a rotation angle of the pan-tilt motor, and
wherein the pan-tilt device is further configured to rotate based on one or more of the rotation speed, the rotation direction and the rotation angle of the pan-tilt motor.

5. The monitoring equipment according to claim 1, wherein the monitoring equipment is further configured to determine a first updated position of the moving object and transmit information related to the first updated position of the moving object to the pan-tilt device.

6. The monitoring equipment according to claim 5, wherein the motion detection device is further configured to transmit the information related to the initial position to the imaging device,
wherein the imaging device is configured to determine the first updated position of the moving object based on the information related to the initial position by a vision detection algorithm.

7. The monitoring equipment according to claim 6, wherein the imaging device is configured to:
detect one or more candidate objects in the images captured by the imaging device by the vision detection algorithm,
determine a deviation among the positions of the one or more candidate objects and the initial position of the moving object based on the information related to the initial position,
select a candidate object from the one or more candidate objects based on the deviation,
determine the position of the selected candidate object as the first updated position of the moving object.

8. The monitoring equipment according to claim 5, further comprising a communication device configured to transmit data via a communication network,
wherein the imaging device is further configured to transmit the captured images to a server via the communication device,
wherein the motion detection device is further configured to transmit the information related to the initial position to the server via the communication device,
wherein the communication device is further configured to receive the information related to the first updated position of the moving object from the server, the first updated position of the moving object is determined by a vision detection algorithm run on the server based on the initial position and the captured images.

9. The monitoring equipment according to claim 5, wherein the pan-tilt device is configured to rotate to adjust the imaging orientation of the imaging device toward the moving object based on the information related to the first updated position.

10. The monitoring equipment according to claim 1, wherein the pan-tilt device is further configured to rotate to adjust the imaging orientation of the imaging device to align the centre of the field of view of the imaging device with the moving object.

11. The monitoring equipment according to claim 1, further comprising a storage device configured to store the images captured by the imaging device.

12. The monitoring equipment according to claim 1, wherein the imaging device is configured to switch from the second mode to the first mode in response to detecting that a first mode condition is satisfied.

13. The monitoring equipment according to claim 12, wherein the first mode condition comprises one or more of the following:
the images device has been in the second mode for more than a threshold time;
the number of frames of images captured by the imaging device for the moving object is greater than a threshold number of frames;
a user instruction;
the distance between the moving object and a reference position is greater than a threshold distance; and
the moving object disappears from the field of view of the imaging device.

14. The monitoring equipment according to claim 5, wherein the motion detection device is further configured to determine a second updated position of the moving object when the imaging device is in the second mode, and transmit information related to the second updated position to the pan-tilt device,
wherein the pan-tilt device is configured to rotate to adjust the imaging orientation of the imaging device toward the moving object based on the information related to the first updated position and the information related to the second updated position.

15. The monitoring equipment according to claim 5, wherein the motion detection device is further configured to determine a second updated position of the moving object and transmit information related to the second updated position to the imaging device when the imaging device is in the second mode,
wherein the imaging device is configured to generate the information related to the first updated position based on the information related to the second updated position.
